# EUROPEAN PATENT SPECIFICATION

(11) **EP 1 935 471 B1**
(45) Date of publication and mention of the grant of the patent: **26.10.2011**
(21) Application number: 07121907.5
(22) Date of filing: 29.11.2007
(51) Int. Cl.: B01D 35/30, B01D 29/56, C02F 1/00

(54) **Device for treating and filtering water**
Vorrichtung zum Behandeln und Filtern von Wasser
Dispositif pour traiter et filtrer l'eau

(30) Priority: 15.12.2006 IT PD20060123 U
(43) Date of publication of application: 25.06.2008
(73) Proprietor: Atlas Filtri S.r.l., 35010 Limena (PD) (IT)
(72) Inventor: Costantini, Giovanni, 36016 Thiene VI (IT); Ronchi, Riccardo, 31046 Oderzo TV (IT)
(74) Representative: Forattini, Amelia

(56) References cited:
- WO-A-91/10493
- WO-A-2006/078587
- US-A- 4 713 175
- US-A1- 2004 065 602

## Description

The present invention relates to a device for treating and filtering water.

Devices for treating and filtering water are currently known and widespread which can be installed for example under a sink but can be associated in general with any water point; these treatment and filtration devices are designed for example for domestic uses, such as purifying drinking water, protecting faucets, the boiler and electrical household appliances such as washing machines and dishwashers, and also for industrial uses such as prefiltration, microfiltration, protection of pumps, heating systems, softening or dechlorination systems, demineralization systems or reverse osmosis systems.

These known devices are constituted generally by a containment cup for a filtration cartridge, which is fixed reversibly, by interposing a sealing gasket, to a corresponding head for the inflow and outflow of the water from the cup.

The head has an intake port with a first coupling for connection, by means of a nipple or union or quick coupling, to a water intake pipe, the intake port being open onto an annular duct which allows the water to descend into the cup and externally to the filtration cartridge.

The head also has a discharge port with a second coupling for connection, by means of an additional nipple, union, quick coupling or the like, to a water discharge pipe, the water reaching the discharge port by means of a central riser opening, after passing radially through the cartridge towards its interior.

A centering and sealing collar for the cartridge is provided around the central opening.

An annular portion is formed below the body of the head and is internally threaded complementarily for a corresponding thread provided around the mouth of the cartridge supporting cup.

These known types of device can be installed in series to provide more accurate filtration of water or to ensure that the water undergoes more than one treatment.

Currently, in order to associate in series two or more of the devices described above, it is necessary to connect the heads by means of nipples, quick couplings or the like, which in turn are mutually connected to corresponding pipes, and finally the various heads have to be fixed to a single support.

These operations for interconnecting several filtration devices in series require, as shown, a plurality of connecting components which constitute an additional cost and require a certain time to assemble.

Further, the use of unions, generally of the elbow type, and connecting pipes entails load losses of various kinds which compromise the optimum yield of the mutually connected devices, in addition to the fact that each connection also constitutes a point of potential disconnection in case of mechanical stresses generated by a sudden pressure variation of the water, with all the consequent drawbacks.

US 4 713 175 discloses a water purification system with a unitary head wherein two cartridges can be fitted and sealed with either an O-ring or a gasket.

The aim of the present invention is to provide a device for filtering and treating water, which is capable of obviating the drawbacks of known types of device associated in series.

Within this aim, an object of the present invention is to provide a device which is quicker and cheaper to provide than known types of device.

Another object of the present invention is to provide a device which eliminates the risks of load losses which are typical of known devices.

Another object of the present invention is to provide a device which is more resistant to mechanical stresses caused by pressure variations.

Another object of the present invention is to provide a device for treating and filtering water which can be manufactured with known systems and technologies.

This aim and these and other objects, which will become better apparent hereinafter, are achieved by a device for treating and filtering water, according to claim 1.

Further characteristics and advantages of the invention will become better apparent from the following detailed description of three preferred but not exclusive embodiments thereof, illustrated by way of non-limiting example in the accompanying drawings, wherein:
Figure 1 is a perspective view of the device in a first embodiment thereof;
Figure 2 is a perspective view of the device in a second embodiment thereof;
Figure 3 is a sectional side view of the device according to the invention in a third embodiment thereof;
Figure 4 is a sectional side view of a portion of the device according to the invention in the first embodiment, fitted with a first type of cartridge;
Figure 5 is a sectional side view of a portion of the device according to the invention as illustrated in Figure 4, fitted with a second type of cartridge;
Figure 6 is a sectional side view of the second embodiment of Figure 2.

With reference to the figures, a device for treating and filtering water according to the invention is generally designated by the reference numeral 10 in its first embodiment.

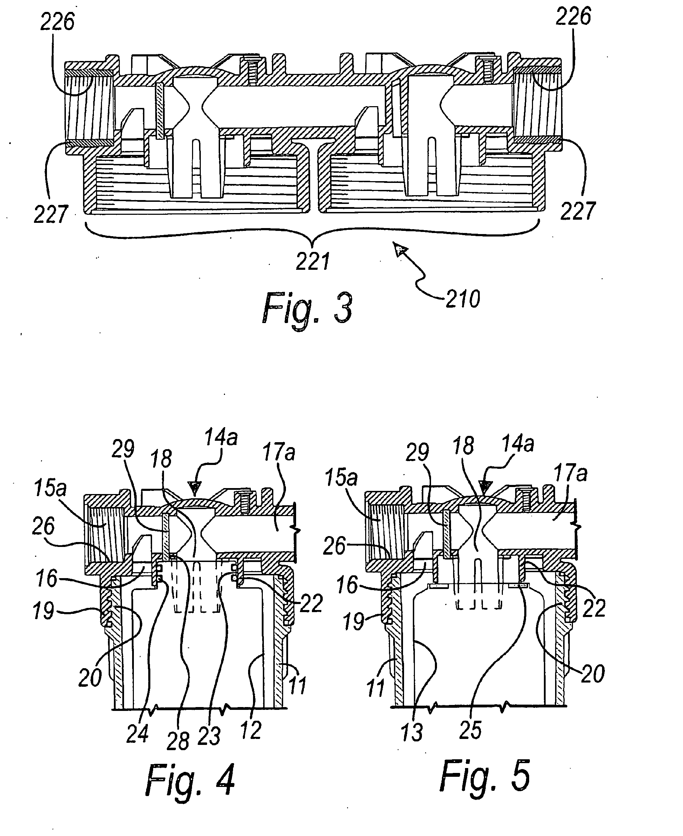

The device 10 comprises two cups 11 for containing a filtration cartridge 12 (shown by way of example in Figure 4) or 13 (shown by way of example in Figure 5).

Each cup 11 is fixed reversibly to a corresponding head, respectively 14a and 14b, for the intake and discharge of the water in and from the cup 11.

Each head 14a and 14b has a first water intake port, respectively 15a and 15b, which is open onto an annular duct 16 which allows the water to descend into the cup 11, outside the filtration cartridge 12 or 13, and a second discharge port, respectively 17a and 17b, which the water reaches by means of a central riser opening 18, after passing radially through the cartridge 12 or 13 toward its interior.

Below the body of each head 14a and 14b there is an annular portion 19, which is internally threaded complementarily for a corresponding thread 20 provided around the mouth of the corresponding cartridge supporting cup 11.

The peculiarity of the device 10 according to the invention is that the two heads 14a and 14b are provided as a single body 21, with the discharge port 17a of the first head 14a which is extended without discontinuity into the intake port 15b of the following head, which in this embodiment is the second and last head 14b.

The intake port 15a of the first head 14a and the discharge port 17b of the last head 14b are provided with connecting means for a union for connection to a pipe respectively for introducing and discharging water; said unions and said pipes are not shown for the sake of simplicity, since they are of a per se known type.

A collar 22 for centering and sealing the respective cartridge 12 or 13 is provided around the central opening 18 of each head 14a and 14b.

The collar 22 is designed to form a sealing surface both for cartridges of a first type, such as 12, with a neck 23 which is concentric with respect to the collar 22, and one or more annular seals 24, O-rings, which are inserted in corresponding grooves provided on the neck 23, both for cartridges of a second type such as 13, without a neck and with a flat annular gasket 25 associated with the upper rim of the cartridge 13.

A slot 28 for inserting a partition 29 adapted to divert the water entering the annular duct 16 is provided in the first head 14a of the single body 21, between the collar 22 and the central opening 18, on the side of the intake port 15a.

The definition of the slot 28 and the application of the partition 29 are necessary to provide the single body 21 by molding.

The partition 29 also is made of plastics.

As mentioned, in this first embodiment of the invention, the single body 21 comprises two heads 14a and 14b arranged in series.

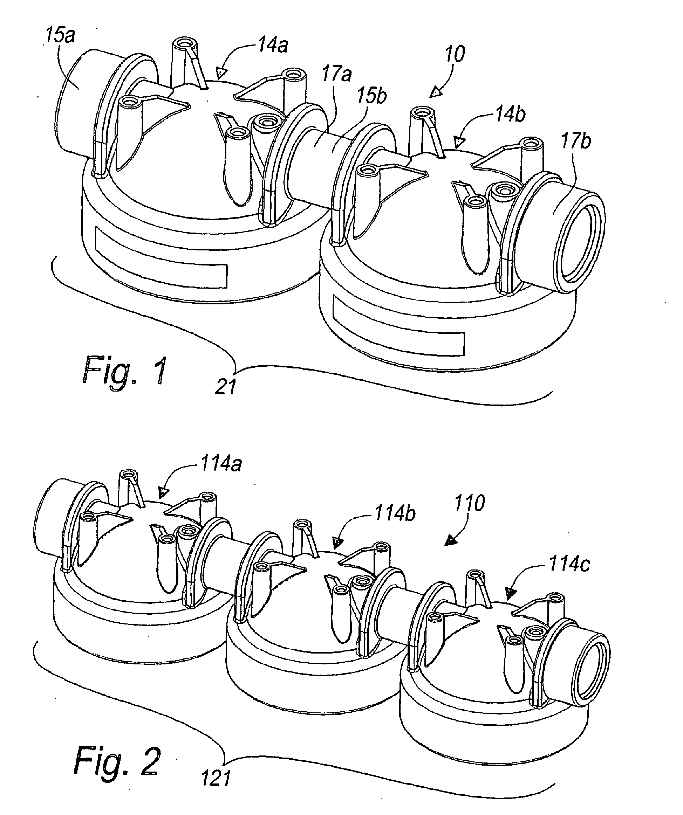

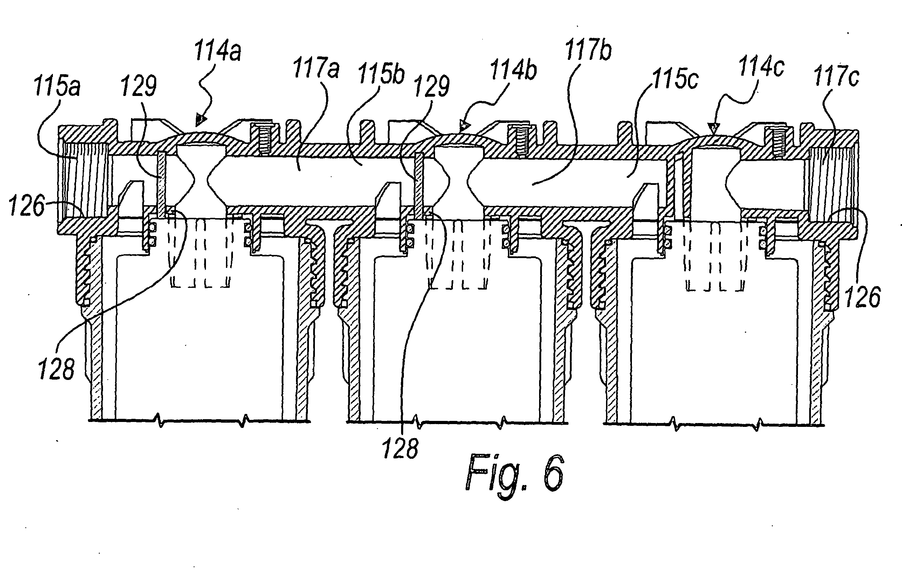

Figures 2 and 6 illustrate a second embodiment of the device according to the invention, designated therein by the reference numeral 110 and characterized in that the single body 121 comprises three heads 114a, 114b, and 114c arranged in series.

Figure 6 clearly shows that the discharge port 117a of the first head 114a continues into the intake port 115b of the second head 114b, and that the discharge port 117b of the second head 114b continues into the intake port 115c of the third head 114c.

Figure 6 also shows the partitions 129 and the corresponding slots 128 are also indicated therein.

The single body 21 and 121, as mentioned, is conveniently provided by molding plastics.

The connecting means for a union are provided, for the intake ports 15a and 115a and the discharge ports 17b in the first embodiment and 117c in the second embodiment, by a thread 26 for the first embodiment 10 and 126 for the second embodiment 110, whose dimensions are selected between one inch, three quarters of an inch, half an inch, one quarter of an inch, or other similar and equivalent threads.

In the two embodiments of the invention 10 and 110 described so far, the threads 26 and 126 are provided on the single body 21 and 121 respectively during molding or by means of subsequent processes.

In a third embodiment of the invention, shown in Figure 3 and designated therein by the reference numeral 210, the threads 226 are formed on a metallic collar 227, on which the single body 221 is overmolded.

The device 10, 110 and 210 according to the invention integrates, as shown, in a single body 21, 121 and 221 two or more heads 14b, 14b, 114a, 114b, 114c; this avoids the use of nipples, unions and corresponding pipes for the connection of several heads in series, with a great saving in terms of components and installation times.

In practice it has been found that the invention thus described solves the problems noted in known types of water treatment and filtration device.

In particular, the present invention provides, as mentioned, a device which is cheaper and quicker to install than known types of device.

Moreover, a device has been provided which eliminates the risks of load losses which are typical of known devices, since there are no longer the discontinuities produced by the intermediate connections provided by nipples, unions and the like, and by the interposed pipes.

For the same reason, the invention provides a device which is more resistant to the mechanical stresses produced by water pressure variations.

Moreover, the device according to the invention has very small dimensions with respect to known devices with an equal number of heads, an advantage which is particularly appreciable in domestic applications, such as for example under a sink.

Further, the device according to the invention, thanks to the collar 22 formed in each head, allows fixing to the single body 21, 121 and 221 both of standard cartridges of the first type 12, with the neck 23 and the annular seals 24, and of standard cartridges of the second type 13, without a neck and with the flat annular gasket 25; therefore, the device according to the invention, thanks to this standardization, can be used for a wide and diverse range of applications.

Moreover, the present invention provides a device for treating and filtering water which can be manufactured cheaply by molding plastics and in general by means of known systems and technologies.

In practice, the materials employed, so long as they are compatible with the specific use, as well as the dimensions, may be any according to requirements and to the state of the art.

## Claims

1. A device for treating and filtering water, of the type which comprises at least two cups (11) for containing a filtration cartridge (12, 13), each cup (11) being fixed reversibly to a corresponding head (14a, 14b, 114a, 114b, 114c) for the intake and discharge of the water from said cup (11), each head (14a, 14b) having a first water intake port (15a, 15b, 115a, 115b, 115c) which is open onto an annular duct (16) which allows the water to descend into the cup (11), outside the filtration cartridge (12, 13), and a second discharge port (17a, 17b, 117a, 117b, 117c), which the water reaches by means of a central riser opening (18), after passing radially through the cartridge (12, 13) towards its interior, below the body of each head (14a, 14b, 114a, 114b, 114c) there being an annular portion (19) which is internally threaded complementarily for a corresponding thread (20) provided around the mouth of the corresponding cartridge supporting cup (11), and wherein said heads (14a,14b. 114a, 114h, 114c) are provided as a single body (21, 121), with the discharge port (17a, 117a) of a first head (14a, 114a) which is extended without discontinuity into the intake port (15b, 115b) of the following head (14b, 114b), the intake port (15a, 115a) of the first head (14a, 114a) and the discharge port (17b, 117c) of the lest head (14b) being preset with connecting means for unions with corresponding pipes respectively for introducing water and discharging water from the device (10), said device being **characterized in that** it is further provided with a collar (22) for centering and sealing the respective cartridge (12, 13) that is provided around said central opening (18) of each head (14a, 14b, 114a, 114b, 114c), and with a slot (28, 128) in which a partition (29,129) is inserted that is adapted to divert the incoming water in the annular duct (16), said at (28, 128) being provided in all the beads (14a, 114a, 114b) of the single body (21) except for one (14b, 114c), between said collar (22) and the central opening (18), on the side of the intake port (15a, 115c).

2. The device according to claim 1, **characterized in that** said single body (21) comprises two heads (14a, 14b) arranged in series.

3. The device according to claim 1. **characterized in that** said single body (121) comprises three heads (114a, 114b, 114c) arranged in series.

4. The device according to one or more of the preceding claims, **characterized in that** said single body (21,121.221) is provided by molding plastics.

5. The device according to one or more of the preceding claims, **characterized in that** said connecting means for a union are provided, for the intake ports (15a, 115a) and discharge pom (17b, 117c) by a thread (26, 126) whose dimensions are selected between one inch, three quarters of an inch, half an inch, one quarter of an inch or other similar and equivalent threads, said, threads (26, 126) being provided on the single body (21,121).

6. The device according to claim 5, **characterized in that**, as an alternative, said thread (226) is formed on a mettalic collar (227) on which the single body (221) is overmolded.

7. The device according to any of the preceding claims, **characterized in that** the intake ports (15a, 15b, 115a, 115b, 115c) and the discharge ports (17a, 17b, 117a, 117b, 117c) of said heads (14a, 14b, 114a, 114b,114c) provided as a single body (21, 121, 221) are arranged coaxial.

## Patentansprüche

1. Eine Vorrichtung zum Behandeln und Filtern von Wasser, von der Art, die mindestens zwei Behälter (11) zum Halten einer Filtrationspatrone (12, 13) umfasst, wobei jeder Behälter (11) reversibel an einem entsprechenden Kopf (14a, 14b, 114a, 114b, 114c) für den Ein- und Auslass des Wassers von dem Behälter (11) befestigt ist und jeder Kopf (14a, 14b) eine erste Wasser-Einlassöffnung (15a, 15b, 115a, 115b, 115c) hat, die sich zu einem ringförmigen Kanal (16) hin öffnet, welcher es dem Wasser ermöglicht, außerhalb der Filtrationspatrone (12, 13) in den Behältern (11) hinabzufließen, und eine zweite Auslassöffnung (17a, 17b, 117a, 117b, 117c), die das Wasser durch eine zentrale Steigöffnung (18) erreicht, nachdem es radial durch die Patrone (12, 13) zu ihrem Inneren hin geflossen ist, wobei sich unterhalb des Körpers jedes Kopfs (14a, 14b, 114a, 114b, 114c) ein ringförmiger Abschnitt (19) befindet, der ein Innengewinde hat, komplementär zu einem entsprechenden Gewinde (20), das um die Öffnung des jeweiligen die Patrone tragenden Behälters (11) herum angeordnet ist, und wobei die Köpfe (14a, 14b, 114a, 114b, 114c) als einteiliger Körper (21, 121) bereitgestellt sind, wobei die Auslassöffnung (17a, 117a) eines ersten Kopfs (14a, 114a) sich ohne Diskontinuität in die Einlassöffnung (15b, 115b) des folgenden Kopfs (14b, 114b) erstreckt und die Einlassöffnung (15a, 115a) des ersten Kopfs (14a, 114a) und die Auslassöffnung (17b, 117c) des letzten Kopfs (14b) mit Verbindungsmitteln voreingestellt sind, für Verbindungen mit entsprechenden Rohren, zum Einlassen beziehungsweise Ablassen von Wasser aus der Vorrichtung (10), wobei die Vorrichtung **dadurch gekennzeichnet ist, dass** sie weiter mit einer Manschette (22) zum Zentrieren und Abdichten der entsprechenden Patrone (12, 13) ausgestattet ist, die um die zentrale Öffnung (18) jedes Kopfs (14a, 14b, 114a, 114b, 114c) herum angeordnet ist, und mit einem Schlitz (28, 128), in den eine Abtrennung (29, 129) eingesetzt ist, die ausgebildet ist, um das einfließende Wasser in dem ringförmigen Kanal (16) umzulenken, wobei der Schlitz (28, 128) in allen Köpfen (14a, 114a, 114b) des einzelnen Körpers (21) bereitgestellt ist, außer einem (14b, 114c), zwischen der Manschette (22) und der zentralen Öffnung (18), auf der Seite der Einlassöffnung (15a, 115c).

2. Die Vorrichtung gemäß Anspruch 1, **dadurch gekennzeichnet, dass** der einteilige Körper (21) zwei seriell angeordnete Köpfe (14a, 14b) umfasst.

3. Die Vorrichtung gemäß Anspruch 1, **dadurch gekennzeichnet, dass** der einteilige Körper (121) drei seriell angeordnete Köpfe (114a, 114b, 114c) umfasst.

4. Die Vorrichtung gemäß einem oder mehreren der obigen Ansprüche, **dadurch gekennzeichnet, dass** der einteilige Körper (21, 121, 221) durch das Formen von Kunststoff gebildet wird.

5. Die Vorrichtung gemäß einem oder mehreren der obigen Ansprüche, **dadurch gekennzeichnet, dass** die Verbindungsmittel für eine Verbindung, für die Einlassöffnungen (15a, 115a) und Auslassöffnungen (17b, 117c), durch ein Gewinde (26, 126) bereitgestellt werden, dessen Maße gewählt sind zwischen einem Zoll, einem Dreiviertelzoll, einem halben Zoll, einem Viertelzoll oder anderen ähnlichen und äquivalenten Gewinden, wobei die Gewinde (26, 126) an dem einteiligen Körper (21, 121) angebracht sind.

6. Die Vorrichtung gemäß Anspruch 5, **dadurch gekennzeichnet, dass**, als Alternative, das Gewinde (226) an einer metallischen Manschette (227) geformt ist, auf welche der einteilige Körper (221) umspritzt ist.

7. Die Vorrichtung gemäß einem beliebigen der obigen Ansprüche, **dadurch gekennzeichnet, dass** die Einlassöffnungen (15a, 15b, 115a, 115b, 115c) und die Auslassöffnungen (17a, 17b, 117a, 117b, 117c) der Köpfe (14a, 14b, 114a, 114b, 114c), die als einteiliger Körper (21, 121, 221) bereitgestellt sind, koaxial angeordnet sind.

## Revendications

1. Dispositif pour traiter et filtrer l'eau, du type comprenant au moins deux coupelles (11) pour contenir une cartouche de filtration (12, 13), chaque coupelle (11) étant fixée de manière réversible à une tête (14a, 14b, 114a, 114b, 114c) correspondante, pour l'admission et la décharge d'eau provenant de ladite coupelle (11), chaque tête (14a, 14b) comprenant un premier orifice d'admission d'eau (15a, 15b, 115a, 115b, 115c), ouvert sur un conduit (16) annulaire permettant à l'eau de descendre dans la coupelle (11), à l'extérieur de la cartouche de filtration (12, 13), et un deuxième orifice de décharge (17a, 17b, 117a, 117b, 117c), qu'atteint l'eau au moyen d'une ouverture centrale (18) de colonne montante, après un passage radialement à travers la cartouche (12, 13) vers son volume intérieur, au-dessous du corps de chaque tête (14a, 14b, 114a, 114b, 114c) étant prévue une partie annulaire (19) munie d'un filetage intérieur, complémentaire d'un filetage mâle (20) correspondant prévu autour de l'embouchure de la coupelle supportant la cartouche (11) correspondante, et dans lequel lesdites têtes (14a, 14b, 114a, 114b, 114c) sont munies d'un corps (21, 121) unique, avec l'orifice de décharge (17a, 117a) d'une première tête (14a, 114a) étendu sans discontinuité dans l'orifice d'admission (15b, 115b) de la tête (14b, 114b) suivante, l'orifice d'admission (15a, 115a) de la première tête (14a, 114a) et l'orifice de décharge (17b, 117c) de la dernière tête (14b) étant prémontés avec des moyens de connexion pour des raccords avec des tubes correspondants, respectivement pour introduire de l'eau et décharger de l'eau à partir du dispositif (10), ledit dispositif étant **caractérisé en ce qu'**il est en outre muni d'une collerette (22) pour centrer et isoler de manière étanche la cartouche (12, 13) respective, qui est placée autour de ladite ouverture centrale (18) de chaque tête (14a, 14b, 114a, 114b, 114c), et avec une fente (28, 128) dans laquelle est insérée une subdivision (29, 129), adaptée pour détourner l'eau entrant dans le conduit annulaire (16), ladite subdivision (28, 128) étant prévue dans toutes les têtes (14a, 114a, 114b) du corps (21) unique, sauf pour l'une (14b, 114c), entre ladite collerette (22) et l'ouverture centrale (18), sur un côté de l'orifice d'admission (15a, 115c).

2. Dispositif selon la revendication 1, **caractérisé en ce que** ledit corps (21) unique comprend deux têtes (14a, 14b) installées en série.

3. Dispositif selon la revendication 1, **caractérisé en ce que** ledit corps (121) unique comprend trois têtes (114a, 114b, 114c) installées en série.

4. Dispositif selon l'une ou plusieurs des revendications précédentes, **caractérisé en ce que** ledit corps (21, 121, 221) unique est fourni par moulage de matière synthétique.

5. Dispositif selon l'une ou plusieurs des revendications précédentes, **caractérisé en ce que** lesdits moyens de connexion pour un raccord sont fournis, pour les orifices d'admission (15a, 115a) et orifices de décharge (17b, 117c), par un filetage (26, 126) dans les dimensions sont sélectionnées entre 25,4 mm (un pouce), 19,05 mm (3/4 de pouce), 12,7 mm (un demi-pouce), 6,35 mm (un quart de pouce), ou d'autres filetages similaires et équivalents, lesdits filetages (26, 126) étant prévus sur le corps (21, 121) unique.

6. Dispositif selon la revendication 5, **caractérisé en ce que**, à titre de variante, ledit filetage (226) est formé sur une collerette (227) métallique, sur laquelle le corps (221) unique est surmoulé.

7. Dispositif selon l'une quelconque des revendications précédentes, **caractérisé en ce que** les orifices d'admission (15a, 15b, 115a, 115b, 115c) et les orifices de décharge (17a, 17b, 117a, 117b, 117c) desdites têtes (14a, 14b, 114a, 114b, 114c), fournis sous la forme de corps (21, 121, 221) unique, sont agencés coaxialement.
